# EUROPÄISCHE PATENTSCHRIFT

(11) **EP 2 638 333 B1**
(45) Veröffentlichungstag und Bekanntmachung des Hinweises auf die Patenterteilung: **22.10.2014**
(21) Anmeldenummer: 11810542.8
(22) Anmeldetag: 11.11.2011
(51) Int. Cl.: F24J 2/30, F24J 2/04, F24J 2/26, F24J 2/46

(54) **SOLARKOLLEKTOR**
SOLAR COLLECTOR
COLLECTEUR D'ÉNERGIE SOLAIRE

(30) Priorität: 11.11.2010 AT 18552010
(43) Veröffentlichungstag der Anmeldung: 18.09.2013
(73) Patentinhaber: Greiner Renewable Energy GmbH, 4653 Eberstalzell (AT)
(72) Erfinder: HUEMER, Herbert, A-4655 Vorchdorf (AT)
(74) Vertreter: Burger, Hannes
(86) Internationale Anmeldenummer: PCT/AT2011/050029
(87) Internationale Veröffentlichungsnummer: WO 2012/061865

(56) Entgegenhaltungen:
- EP-A1- 1 106 938
- WO-A1-2008/075858
- WO-A2-2008/075286
- DE-U1-202006 008 162
- FR-A1- 2 628 510
- JP-A- 59 112 154
- JP-A- 59 221 559
- JP-A- 61 134 542

## Beschreibung

Die Erfindung betrifft einen Solarkollektor gemäß dem Oberbegriff des Patentanspruches 1 sowie ein Verfahren zum Betreiben eines Solarkollektors gemäß Oberbegriff des Anspruches 18.

Solarkollektoren werden in ständig steigendem Ausmaße zum Zwecke der Brauchwassererwärmung oder Raumheizung eingesetzt, was sowohl durch steigendes Umweltbewusstsein als auch durch wirtschaftliche Überlegungen begründet ist.

Standardmäßig sind Pumpen zur Umwälzung eines Wärmeträgerfluids durch Solarkollektoren Bestandteil einer sogenannten Solarstation und ist diese zumeist witterungsgeschützt in einem Gebäude, im Allgemeinen in einem Heizraum untergebracht, wo auch die Solarkollektoranlage mit sonstigen wärmetechnischen Anlagenteilen gekoppelt wird und die Steuerung angeordnet ist. Von dieser Einbindung der Solarkollektoren in eine Warmwasserbereitstellungsanlage bzw. Heizungsanlage hängt die Betriebssicherheit eines Solarkollektors in hohem Maße ab Als Nachteil bei der Montage derartiger Solarstationen ist ein zusätzlich zur eigentlichen Kollektormontage erforderlicher Installationsaufwand und Platzbedarf anzuführen.

Aus JP 59-112154 A, die einen Solarkollektor gemäß dem Oberbegriff des Anspruchs 1 offenbart, JP 61-134542 A, JP 59-221559 A, DE 20 2006 008162 U1, EP 1 106 938 A1 und FR 2 628 510 A1 sind Solarkollektoren bekannt, bei denen eine Umwälzpumpe integriert ist.

Die Aufgabe der Erfindung besteht darin, einen Solarkollektor bereitzustellen, der mit geringem Aufwand montiert und auch in Betrieb genommen werden kann.

Die Aufgabe der Erfindung wird durch einen Solarkollektor mit den kennzeichnenden Merkmalen des Anspruches 1 gelöst. Die Anordnung der Umwälzpumpe für das Wärmeträgerfluid am bzw. im Solarkollektor erlaubt auf eine eigene Solarstation innerhalb eines Gebäudes zu verzichten und reduziert dadurch den Aufwand für Montage und Inbetriebnahme einer damit ausgestatteten Solaranlage. Durch die Integration der Pumpe am oder im Solarkollektor ist der Vorfertigungsgrad höher und können Probleme bei der Umwälzung des Wärmeträgerfluids durch mögliche Fehler bei der Installation der Solarstation von vornherein ausgeschaltet werden. Der Witterungsschutz für die Pumpe ist dabei bei einem Einbau im Inneren durch die Abdichtung des Solarkollektors gegeben.

Durch die Rückkühlfunktion erreichen die Bauteile des Solarkollektors im Stagnationsfall, also bei fehlender Wärmeabnahme durch den Wärmeverbraucher, wesentlich geringere Temperaturen, weshalb die Bauteile des Solarkollektors unter Verwendung von Materialien hergestellt werden können, die geringeren Anforderungen an die Temperaturbeständigkeit genügen und daher auch wesentlich kostengünstiger sein können, als herkömmliche hochtemperaturbeständige Materialien.

Die einfache Regelung des Ventils gemäß Anspruch 2 basierend auf der Rücklauftemperatur des vom Wärmeverbraucher zum Solarkollektor umgewälzten Wärmeträgerfluids stellt eine einfache und zuverlässige Lösung dar, da bei Unterschreiten einer Grenztemperatur offensichtlich ein Wärmebedarf am Wärmeverbraucher vorliegt bzw. Wärmespeicherkapazität frei ist oder bei Überschreiten der Grenztemperatur kein Wärmebedarf vorliegt und das vom Absorber erhitzte Wärmeträgerfluid zum Rückkühlwärmetauscher gepumpt wird.

Regler und Ventil können im einfachsten Fall durch ein thermostatgeregeltes 3/2-WegeVentil gebildet sein, bei dem eine Schaltstellung die Rücklaufleitung mit dem Absorber verbindet und eine zweite Schaltstellung den Absorber mit dem Rückkühlwärmetauscher verbindet und das Thermostat die Umschaltung zwischen den beiden Schaltstellungen bewirkt. Wichtig ist dabei, dass das Thermostat die Temperatur des Wärmeträgerfluids in der Rücklaufleitung erfasst. Sobald der Wärmeverbraucher, beispielsweise ein Warmwasserbehälter oder ein Pufferspeicher seine Maximaltemperatur erreicht hat, ist auch die Temperatur in der Rücklaufleitung dementsprechend hoch und schaltet das Ventil von Wärmelieferung an den Wärmeverbraucher um auf Wärmeabfuhr über den Rückkühlwärmetauscher.

Die Stromversorgung der Pumpe gemäß Anspruch 3 durch ein am Solarkollektor angeordnetes Photovoltaikmodul bewirkt einen Betrieb der Pumpe lediglich bei ausreichender Solarstrahlung, und fördert diese die Wärme für Warmwasserbereitung oder zu Raumheizungszwecken zum Wärmeverbraucher. Bei fehlendem Wärmebedarf kann die Pumpe das Wärmeträgerfluid auch zu einem gegebenenfalls vorhandenen Rückkühlwärmetauscher fördern. Bei fehlender oder unzureichender Solarstrahlung bewirkt die nicht ausreichende Stromversorgung einen Stillstand der Pumpe, der ihre Lebensdauer verlängert, da sie nur in Betrieb ist, wenn Wärme entweder zum Wärmeverbraucher oder zum Rückkühlwärmetauscher zu führen ist. Die Anordnung der Umwälzpumpe am bzw. im Solarkollektor und deren Stromversorgung durch ein am Solarkollektor angeordnetes Photovoltaikmodul bewirkt, dass der Solarkollektor sich in allen Betriebszuständen gewissermaßen selbst regelt und dadurch eine hohe Betriebssicherheit aufweist, da im Stagnationsfall eine autonome Rückkühlfunktion gegeben ist und Überhitzungsprobleme dadurch vermieden werden. Weiters ist die Inbetriebnahme eines derartigen Solarkollektors sehr einfach, da lediglich die Vorlaufleitung und die Rücklaufleitung mit dem Wärmeverbraucher verbunden werden müssen, und auf die Installation von Stromversorgungsleitungen oder Steuerleitungen gänzlich verzichtet werden kann. Ein derartiger Solarkollektor ist bei hoher Betriebssicherheit universell einsetzbar und ermöglicht weiters eine einfache Inbetriebnahme eines Solarkollektorsystems.

Eine Anordnung des Rückkühlwäimetauschers gemäß Anspruch 4 ist von Vorteil, da durch dessen warme Oberfläche und die im Allgemeinen bestehende Neigung eines Solarkollektors gegenüber der Horizontalen eine Konvektionsströmung ausgebildet wird, die die Wärmeabfuhr an der Rückseite des Solarkollektors fördert. Weiters wird dadurch an der Vorderseite die für Strahlungsaufnahme und Stromerzeugung zur Verfügung stehende Fläche nicht reduziert.

Die Ausbildung des Solarkollektors gemäß Anspruch 5 verhindert unerwünschte Wärmeabfuhr aus dem Solarkollektor, während des Normalbetriebes mit Wärmelieferung an den Wärmeverbraucher und verhindert Wärmeaustausch zwischen dem Absorber und dem Rückkühlwärmetauscher. Die Wärmedämmung kann, wie auch bei herkömmlichen Solarkollektoren aus einem mineralischen Werkstoff, vorzugsweise Mineralwolle, bestehen, aufgrund der niedrigeren Stagnationstemperatur kann jedoch auch auf organische Dämmstoffe oder Polymer-Schaumstoffe mit einer Temperaturbeständigkeit von ca. 100°C übergegangen werden.

Ein vorteilhaftes Verhältnis zwischen baulichem Aufwand und Wirksamkeit des Rückkühlwärmetauschers wird durch eine Ausbildung gemäß Anspruch 6 bewirkt. Da der Rückkühlwärmetauscher sowohl durch Konvektion als auch Wärmestrahlung Wärme abgeben kann, ist es möglich diesen kleiner als die Absorberfläche auszuführen und wird trotzdem eine ausreichende Rückkühlung des Wärmeträgerfluids erzielt. Der Rückkühlwärmetauscher kann auch durch einen Teil der Rückwand des Kollektorgehäuses gebildet sein, an der ähnlich wie beim Absorber eine das Wärmeträgerfluid führende Leitung befestigt wird, wodurch ein guter Wärmeübergang gegeben ist. Weiters ist es möglich, dass bei einer Solarkollektoranordnung, die einen erfindungsgemäßen Solarkollektor umfasst, die weiteren Solarkollektoren als herkömmliche Kollektoren ausgeführt sein können, da die Umwälzung des Wärmeträgerfluids durch die eine Pumpe des erfindungsgemäßen Solarkollektors bewerkstelligt werden kann. Im Stagnationsfall kann die überschüssige Wärme der gesamten Solarkollektoranordnung über den Rückkühlwännetauscher des erfindungsgemäßen Solarkollektors abgegeben werden.

Bei einer Ausführung gemäß Anspruch 7 wird die abführbare Wärmemenge maximiert und kann die Temperatur im Stagnationsfall noch niedriger gehalten werden.

Die Ausbildung des Solarkollektors gemäß Anspruch 8 ist von Vorteil, da dies einen ausgewogenen Kompromiss zwischen ausreichender Stromerzeugung zur sicheren Versorgung der Pumpe und einem möglichst geringem Verlust an Absorberfläche darstellt.

Die Stromverbindung zwischen Photovoltaikmodul und Pumpe kann gemäß Anspruch 9 vorteilhaft über eine Impulssteuerung erfolgen, die die Pumpe nur impulsweise aktiviert und dadurch der Stromverbrauch minimiert werden kann. Durch die Trägheit des Wärmeträgerfluids strömt dieses in den Leitungen auch nach Abschalten der Pumpe noch einen kurzen Zeitraum weiter. Dadurch ist es möglich, die aktive Fläche der Photovoltaikmodule kleiner auszuführen und den in den Impulspausen anfallenden Strom in einem Stromspeicher, etwa in Form eines Akkumulators oder eines Kondensators bis zum nächsten Pumpenimpuls zwischenzuspeichern .

Die Ausführung der Steuervorrichtung gemäß Anspruch 10 ermöglicht es, einem Benutzer eines erfindungsgemäßen Solarkollektors oder sonstigen Personen Zustandsdaten des Solarkollektors, insbesondere die Vorlauftemperatur oder dessen Energieertrag zu übermitteln, etwa unter Verwendung eines öffentlichen Mobilfunknetzes. Auch ein Speichern derartiger Daten für eine spätere Auswertung kann durch geeignete Speichervorrichtungen durchgeführt werden.

Aufgrund der auch im Stagnationsfall geringeren Temperatur der Bauteile des Solarkollektors kann dieser vorteilhaft gemäß Anspruch 11 ausgeführt sein, wodurch auf kostengünstigere Materialien bei der Herstellung zurückgegriffen werden kann.

Die Ausführung des Solarkollektors gemäß Anspruch 12 ermöglicht eine baulich einfache Realisierung der bereits beschriebenen, selbsttätigen, autonomen Regelung des Solarkollektors auch im Hinblick auf den Wechsel zwischen Normalbetrieb und Stagnationsfall.

Da die Temperatur des Wärmeträgerfluids im Zweig der Rücklaufleitung im Allgemeinen niedriger ist als im Zweig der Vorlaufleitung, ist die Ausbildung des Kollektors gemäß Anspruch 13 von Vorteil und ist die Temperaturbelastung für die Pumpe dadurch wesentlich niedriger.

Eine weitere Maßnahme zur einfacheren Installation und Inbetriebnahme eines erfindungsgemäßen Solarkollektors besteht in der Ausführung gemäß Anspruch 14, wodurch der gesonderte Einbau eines Ausgleichsgefäßes im Heizraum oder sonstigen Räumen außerhalb des Solarkollektors entfallen kann. Vorzugsweise ist das Ausgleichsgefäß auch innerhalb des Kollektorgehäuses angeordnet. Das Ausgleichsgefäß dient dazu, eine mit der Temperaturänderung des Wärmeträgerfluids verbundene Volumenveränderung desselben aufzunehmen.

Eine weitere Erleichterung der Inbetriebnahme eines erfindungsgemäßen Solarkollektors wird gemäß Anspruch 15 erzielt, da der Kollektor dadurch ohne Verwendung von Füllpumpen betriebsfertig gemacht werden kann. Der Einfüllstutzen kann insbesondere auch am zuvor beschriebenen Ausgleichsgefäß angeordnet sein.

Eine Ausführung gemäß Anspruch 16 ist baulich von Vorteil, da das Sicherheitsventil am Einfüllstutzen gleichzeitig auch zur Befüllung des Solarkollektors bzw. des Ausgleichsgefäßes verwendet werden kann. An das Sicherheitsventil kann zusätzlich eine Leitung anschließen, die in ein Auffanggefäß mündet, damit eventuell austretendes Wärmeträgerfluid nicht ungehindert in die Umwelt austreten kann bzw. in eine Dachentwässerung eintreten kann.

Ein erfindungsgemäßer Solarkollektor kann vorteilhafterweise auch in einer Solarkollektoranordnung gemäß Anspruch 17 mit weiteren Solarkollektoren verbunden sein, wobei diese herkömmliche Solarkollektoren sein können. Bei einer Ausführung mit Rückkühlwärmetauscher hängt die maximale Anzahl an herkömmlichen Solarkollektoren ohne Rückkühlwärmetauscher von der maximal möglichen Wärmeabfuhr des Rückkühlwärmetauschers am erfindungsgemäßen Solarkollektor ab, wobei eine obere Maximaltemperatur nicht überschritten werden darf.

Die Erfindung betrifft weiters ein Verfahren zum Betreiben eines Solarkollektors gemäß Anspruch 18, wonach eine Pumpe zur Umwälzung des Wärmeträgerfluids am oder zumindest teilweise innerhalb des Kollektorgehäuses angeordnet ist. Dadurch kann auf eine gesonderte Solarstation innerhalb eines Gebäudes verzichtet werden. Weiters wird das Wärmeträgerfluid bei Überschreiten einer Grenztemperatur in der Rücklaufleitung ventilgesteuert nach dem Absorber durch einen Rückkühlwärmetauscher in einem Rückkühlkreislauf geführt und die Pumpe durch ein am Solarkollektor angeordnetes Photovoltaikmodul mit Strom versorgt. Dies bewirkt ebenfalls die autonome und energieautarke Betriebsweise eines derartigen Solarkollektors, bei der Schäden durch Überhitzung aufgrund der selbsttätigen Rückkühlung vermieden werden.

Der erfindungsgemäße Solarkollektor kann insbesondere als sogenannter Low-Flow-Kollektor betrieben werden, bei dem ein relativ geringer Durchsatz des Wärmeträgerfluids eingestellt ist, etwa bis 20 Liter je Quadratmeter und Stunde, wodurch in kurzer Zeit eine relativ hohe Vorlauftemperatur zur Verfügung steht.

Zum besseren Verständnis der Erfindung wird diese anhand der nachfolgenden Figuren näher erläutert.

Es zeigen jeweils in stark schematisch vereinfachter Darstellung:
- Fig. 1: eine Ansicht eines erfindungsgemäßen Solarkollektors;
- Fig. 2: einen Schnitt durch einen erfindungsgemäßen Solarkollektor in Einbaulage gemäß Linie II - II;
- Fig. 3: eine Solarkollektoranordnung umfassend einen erfindungsgemäßen Solarkollektor sowie einen herkömmlichen Solarkollektor in Parallelschaltung oder Serienschaltung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

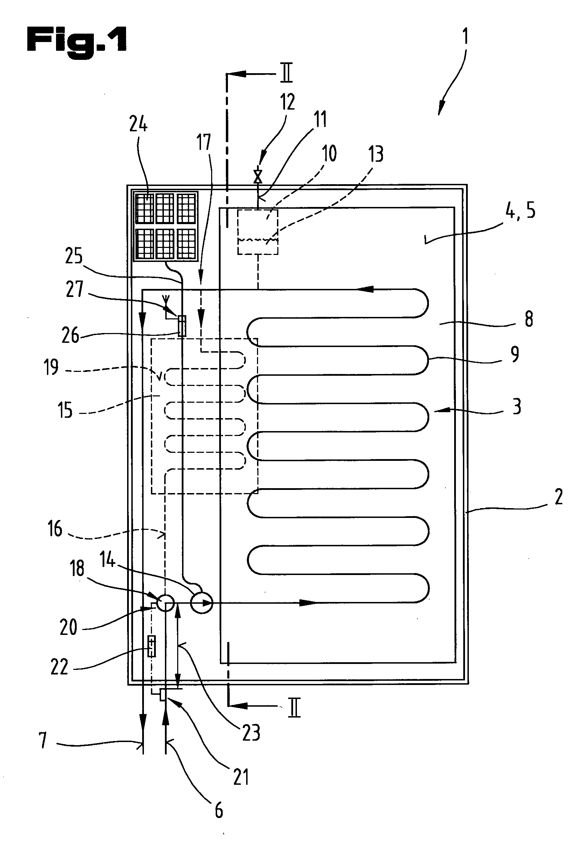

Fig. 1 zeigt eine Ansicht eines Solarkollektors 1, der zur Umwandlung von Solarstrahlung in thermische Energie geeignet ist und mit einem nicht dargestellten Wärmeverbraucher verbunden ist. Der Solarkollektor 1 umfasst dabei ein Kollektorgehäuse 2, in dem ein Absorber 3 angeordnet ist, der der Solarstrahlung ausgesetzt wird. Das Kollektorgehäuse 2 kann dabei rahmenartig ausgeführt sein, wodurch ein Rahmenkollektor gebildet ist, oder beispielsweise auch wannenartig ausgeführt sein, wodurch ein sogenannter Wannenkollektor gebildet ist. Die der Solarstrahlung zugewandte Vorderseite 4 des Solarkollektors 1 ist vorzugsweise mit einer Abdeckscheibe 5 versehen, die Wärmeverluste des Solarkollektors 1 reduziert.

Im Betrieb wird der Absorber 3 von einem Wärmeträgerfluid durchströmt und dieses dabei erwärmt, wobei der Absorber 3 als Flächen- oder Plattenabsorber oder auch als Röhrenabsorber ausgeführt sein kann. Vom Wärmeverbraucher, beispielsweise in Form einer Warmwasserbereitungsanlage oder einer Heizungsanlage führt eine Rücklaufleitung 6 zum Absorber 3 sowie vom Absorber 3 eine Vorlaufleitung 7 zum Wärmeverbraucher. In Fig. 1 ist der Absorber 1 als Flachkollektor ausgebildet, bei dem die Solarstrahlung von einem Absorberblech 8, das beispielsweise aus einer Aluminiumfolie oder Kupferfolie gebildet ist, aufgenommen wird. An dem Absorberblech 8 ist eine in Fig. 1 dargestellte mäanderförmige oder harfenartige Absorberleitung 9, durch die das Wärmeträgerfluid geleitet wird, verschweißt, wodurch eine optimale Wärmeübertragung vom Absorberblech 8 auf die Absorberleitung 9 gegeben ist. Die Durchströmung des Solarkollektors 1 mit Wärmeträgerfluid ist dabei durch schwarze Pfeilspitzen angedeutet.

Die im Betrieb auftretenden Temperaturänderungen des Wärmeträgerfluids bewirken eine Volumenänderung, die mittels eines optionalen Ausgleichsgefäßes 10 ausgeglichen wird. Dieses Ausgleichsgefäß 10 kann vorzugsweise als Bestandteil des Solarkollektors 1 vorgesehen sein und insbesondere am in Einbaulage des Solarkollektors 1 höchsten Punkt des Absorbers 3 bzw. der Rücklaufleitung 6 oder der Vorlaufleitung 7 angeschlossen sein. Weiters kann zur Befüllung des Kollektorkreislaufes ein Einfüllstutzen 11 vorgesehen sein, der ein Befüllen des Wärmeträgerfluidkreislaufes einfach ermöglicht. Der Einfüllstutzen 11 kann weiters vorteilhafterweise mit einem Sicherheitsventil 12 versehen sein, das den Kollektorkreislauf vor schädlichen Überdrücken bewahrt. Der Einfüllstutzen 11 kann alternativ zur Darstellung in Fig. 1 auch getrennt vom Ausgleichsgefäß 10 angeordnet sein, ist aber vorzugsweise ebenfalls am höchsten Punkt des Kollektorkreislaufes angeschlossen.

Im Ausgleichsgefäß 10 ist das Wärmeträgerfluid 13 angedeutet, das die Rücklaufleitung 6, die Absorberleitung 9 sowie die Vorlaufleitung 7, also den vollständigen Kollektorkreislauf ausfüllt.

Der Solarkollektor 1 umfasst weiters eine Pumpe 14, mit der das Wärmeträgerfluid 13 durch den Kollektorkreislauf transportiert wird. Im dargestellten Ausführungsbeispiel ist die Pumpe 14 im Zweig der Rücklaufleitung 6 angeordnet, mit der das zu erwärmende Wärmeträgerfluid 13 dem Absorber 3 zugeleitet wird. Da die Temperatur des Wärmeträgerfluids 13 vor dem Absorber 3 im Allgemeinen geringer ist als nach dem Absorber 3, ist auch die thermische Belastung für die Pumpe 14 dadurch geringer. Die Pumpe 14 ist vorzugsweise als Kreiselpumpe ausgeführt, wobei Ausführungen mit geringem Energiebedarf bevorzugt eingesetzt werden.

Die Pumpe ist vorzugsweise so angeordnet, dass sie durch ihre Anbringung außerhalb des Kollektorgehäuses 2 oder durch eine Öffnung in diesem gut zugänglich ist, um eine gegebenenfalls erforderliche Wartung zu erleichtern. Weiters ist auch eine Anordnung im Ausgleichsgefäß 10 möglich.

Der Solarkollektor 1 kann weiters vorteilhafterweise einen Rückkühlwärmetauscher 15 umfassen, mit dem überschüssige Wärme, die vom Wärmeverbraucher nicht mehr aufgenommen werden kann, an die Außenumgebung abgegeben werden kann. Dieser Zustand bei fehlender Wärmeabnahme wird auch Stagnationszustand genannt und wird bei herkömmlichen Solarkollektoren häufig in diesem Zustand die Umwälzung des Wärmeträgerfluids 13 beendet, um eine Überhitzung des Wärmeverbrauchers und der damit zusammenhängenden Installation zu vermeiden. Während bei herkömmlichen Kollektorsystemen bei diesem Stillstand des Wärmeträgerfluids die Temperaturen der Kollektorbestandteile sehr hohe Werte annehmen können, wird einem derart ausgeführten Solarkollektor 1 das Wärmeträgerfluid 13vom Absorber 3 durch den Rückkühlwärmetauscher 15 geführt, wodurch ein Rückkühlkreislauf 16 innerhalb des Solarkollektors 1 gebildet ist mit dem die Temperatur des Wärmeträgerfluids 13 abgesenkt wird.

Der Rückkühlwärmetauscher 15 ist dabei parallel zum Absorber 3 in die Rücklaufleitung 6 bzw. mit der Vorlaufleitung 7 eingebunden und befindet sich die Pumpe 14 innerhalb des Rückkühlkreislaufes 16. Der Rückkühlwärmetauscher 15 ist an bzw. mit einer ersten Leitungsverbindung 17 mit der Vorlaufleitung 7 sowie mit einer zweiten Leitungsverbindung 18 mit der Rücklaufleitung 6 des Solarkollektors 1 verbunden und wird zur Rückkühlung des Wärmeträgerfluids 13 von diesem von der ersten Leitungsverbindung 17 an der Vorlaufleitung 7 in Richtung zur zweiten Leitungsverbindung 18 an der Rücklaufleitung 6 durchströmt, wobei der Rückkühlwärmetauscher 15 Wärme an die Außenumgebung abgibt und dadurch die Temperatur des Wärmeträgerfluids 13 abgesenkt wird.

Der Rückkühlwärmetauscher 15 kann dabei ähnlich aufgebaut sein wie ein Absorber 3, beispielsweise mit einer an die Außenumgebung grenzenden Wärmetauscherfläche, an der eine das Wärmeträgerfluid 13 führende Leitung mit gutem, thermischen Kontakt befestigt ist.

Alternativ kann der Absorber 3 bzw. der Rückkühlwärmetauscher 15 auch als Plattenwärmetauscher ausgeführt sein, bei dem das Wärmeträgerfluid zwischen zwei in geringem Abstand zueinander parallel angeordneten Platten geführt ist und nicht in einer Leitung geringen Querschnitts.

Der Rückkühlwärmetauscher 15 ist im dargestellten Ausführungsbeispiel auf der Rückseite 19 des Solarkollektors 1 angeordnet und strichliert dargestellt. Die wirksame Fläche des Rückkühlwärmetauschers 15 kann dabei kleiner als die Absorberfläche ausgeführt sein, wie es z.B. in Fig. 1 schematisch dargestellt ist, es ist jedoch auch eine Maximierung der für die Wärmeabfuhr nutzbaren Fläche möglich, indem sich der Rückkühlwärmetauscher im Wesentlichen über die gesamte Rückseite 19 erstreckt oder zumindest 100 % der Absorberfläche entspricht.

Ob das Wärmeträgerfluid 13 vom Absorber 3 über die Vorlaufleitung 7 zum Wärmeverbraucher geführt wird oder vom Absorber 3 im Rückkühlkreislauf 16 durch den Rückkühlwärmetauscher 15 geführt wird, wird vorzugsweise mittels eines Ventils 20 gesteuert, das temperaturabhängig geregelt ist. Dabei wird mittels eines Temperatursensors 21 oder eines Temperaturfühlers die Temperatur des Wärmeträgerfluids 13 in der Rücklaufleitung 6 festgestellt und falls diese unterhalb einer bestimmten Grenztemperatur ist, die Zulaufleitung des Absorbers 3 mit der Rücklaufleitung 6 verbunden und dadurch vom Wärmeverbraucher herangefördertes Wärmeträgerfluid 13 im Absorber 3 erwärmt und über die Vorlaufleitung 7 wieder zum Wärmeverbraucher zurückgeführt oder wenn die festgestellte Temperatur über einer Grenztemperatur ist, der Rückkühlwärmetauscher 15 mit dem Absorber 3 verbunden und im Rückkühlkreislauf 16 die vom Absorber 3 aufgenommene Strahlungsenergie zum Rückkühlwärmetauscher 15 und von diesem als Abwärme an die Außenumgebung abgegeben.

Im dargestellten Ausführungsbeispiel ist das Ventil 20 an der Position der zweiten Leitungsverbindung 18 angeordnet, es ist alternativ auch möglich, das Ventil 20 an der Position der ersten Leitungsverbindung 17 anzuordnen oder sowohl an der ersten Leitungsverbindung 17 und an der zweiten Leitungsverbindung 18 ein Ventil vorzusehen, wodurch ebenfalls zwischen einer Führung des Wärmeträgerfluids 13 über die Vorlaufleitung 7 zum Wärmeverbraucher oder über den Rückkühlwärmetauscher 15 wieder zum Zulauf des Absorbers 3 umgeschaltet werden kann.

Zur Aktivierung des Rückkühlwärmetauschers 15 wird das Ventil 20 in eine Rückkühlstellung verbracht, wozu ein Regler 22 vorgesehen ist. Dieser Regler 22 kann ein eigenständiges Bauelement sein, es kann die Regelfunktion jedoch auch im Ventil 20 oder im Temperatursensor 21 enthalten sein. So kann beispielsweise das Ventil 20 als 3/2 Thermostatventil ausgeführt sein, das die Temperatur des Wärmeträgerfluids 13 in der Rücklaufleitung 6 direkt oder indirekt misst. Eine weitere Möglichkeit des Reglers 22 besteht darin, dass der Temperatursensor 21 als Thermostat ausgeführt ist und je nach der in der Rücklaufleitung 6 vorliegenden Temperatur einen Stellantrieb des Ventils 20 aktiviert bzw. die Antriebsrichtung eines Stellantriebes verändert.

Das Ventil 20 kann auch als Umschaltventil bezeichnet werden, da es im einfachsten Fall nur zwei Schaltstellungen besitzt, es ist jedoch auch eine Ausführung als Mischerventil denkbar, durch das das dem Absorber 3 zugeführte Wärmeträgerfluid 13 in variabler Aufteilung von der Rücklaufleitung 6, also vom Wärmeverbraucher und von dem Rückkühlwärmetauscher 15 zusammengemischt wird. Insbesondere ist eine Ausführung des Reglers 20 unter Verwendung von temperaturempfindlichen Bimetallen möglich.

Die Pumpe 14 ist, wie bereits erwähnt, innerhalb des Rückkühlkreislaufes 16 angeordnet, also wie in Fig. 1 dargestellt, zwischen der zweiten Leitungsverbindung 18 und dem Absorber 3 angeordnet, kann alternativ jedoch auch zwischen dem Absorber 3 und der ersten Leitungsverbindung 17 angeordnet sein.

Damit der Temperatursensor 21 nicht im Einfluss des Rückkühlkreislaufes 16 steht, sondern tatsächlich die Temperatur in der Rücklaufleitung 6 misst, ist der Temperatursensor 21 in einer Distanz 23 vom Rückkühlkreislauf 16 angeordnet, beispielsweise wie in Fig. 1 dargestellt, knapp außerhalb des Kollektorgehäuses 2, wodurch er mit der Außenumgebung in Kontakt steht und während des Rückkühlbetriebes, also bei aktiviertem Rückkühlkreislauf 16 auskühlt, wodurch die Grenztemperatur unterschritten wird, das Ventil 20 umschaltet und daraufhin wieder Wärmeträgerfluid13 aus der Rücklaufleitung 6 dem Absorber 3 zugeführt wird. Sollte dieses eine Temperatur oberhalb der Grenztemperatur aufweisen, wird umgehend wieder auf den Rückkühlbetrieb umgeschaltet. Dadurch ist eine selbsttätige Überwachung der Temperatur in der Rücklaufleitung 6 gewährleistet, da nach jedem Abkühlen des Temperatursensors 21 zumindest kurzzeitig wieder Wärmeträgerfluid 13 vom Wärmeverbraucher über die Rücklaufleitung 6 herangeführt wird.

Die Distanz 23 bewirkt, dass der Temperatursensor 21 thermisch vom Rückkühlkreislauf 16 getrennt ist. Es ist dabei auch möglich, dass der Temperatursensor 21 beispielsweise auch im Heizraum angeordnet ist, wodurch jedoch der Installationsaufwand wieder höher ist.

Die Energie für den Betrieb der Pumpe 14 kann über eine elektrische Versorgungsleitung beispielsweise aus einem Heizraum herangeführt sein, kann jedoch auch, wie in Fig. 1 beispielhaft dargestellt, von einem Photovoltaikmodul 24 bereitgestellt werden, das am Solarkollektor 1 angeordnet ist. Dieses kann dabei im Solarkollektorgehäuse 2 integriert sein bzw. mit der Abdeckscheibe 5 abgedeckt oder außerhalb von dieser angeordnet sein oder es ist auch eine Anordnung außerhalb des Kollektorgehäuses 2 denkbar. Die integrierte Anordnung ermöglicht es jedoch, einen erfindungsgemäßen Solarkollektor 1 unmittelbar angrenzend an benachbarte Kollektoreinheiten zu montieren und dadurch vorhandene Aufstellflächen bestmöglich auszunützen.

Das Photovoltaikmodul 24 kann auch als Solarmodul bezeichnet werden und wandelt unter Nutzung des photoelektrischen Effekts die Energie der Solarstrahlung direkt in elektrische Energie um, die zur Versorgung der Pumpe 14 dienen kann. Darüber hinaus kann es auch zur Versorgung des Ventils 20 mit einen gegebenenfalls vorhandenen Ventilantrieb, zur Versorgung des Reglers 22, einer Steuerungsvorrichtung oder des Temperatursensors 21 verwendet werden. Dabei sind alle gängigen Bauarten von Solarmodulen möglich, wobei diese beispielsweise unter Verwendung von mono- oder polykristallinen Solarzellen oder auch anderen Solarzellentypen aufgebaut sind und wird an dieser Stelle auf den bekannten Stand der Technik von Photovoltaikmodulen 24 verwiesen.

Die optisch aktive Fläche des Photovoltaikmoduls 24 wird so gewählt, dass bei einer Solarstrahlung, die für eine sinnvolle, thermische Nutzung geeignet ist, auch eine ausreichende Versorgungsspannung zur Verfügung gestellt wird. Da bei einer integrierten Anordnung des Photovoltaikmoduls 24 die optisch aktive Fläche die nutzbare Absorberfläche des Absorbers 3 reduziert, ist es von Vorteil, wenn die optisch aktive Fläche möglichst klein gehalten wird und sind daher Bauarten mit einem hohen Wirkungsgrad zu bevorzugen. In Fig. 1 ist der Einfachheit halber lediglich eine Stromversorgungsleitung 25 zwischen Photovoltaikmodul 24 und Pumpe 14 dargestellt, es ist jedoch möglich, dass auch zu anderen Stromverbrauchern, wie beispielsweise Ventil 20, Temperatursensor 21 und Regler 22 zusätzliche Stromversorgungsleitungen 25 führen, die entweder direkt vom Photovoltaikmodul 24 abgehen oder von der einen Stromversorgungsleitung 25 abzweigen. In einer weiteren Ausführungsform des Solarkollektors 1 kann im Verlauf der Stromversorgungsleitung 25 eine Steuerungsvorrichtung 26 vorgesehen sein, mit der die Betriebsweise der Pumpe 14 beeinflusst werden kann, beispielsweise indem die Steuerungsvorrichtung 26 als Impulssteuerung ausgebildet ist und die Pumpe 14 nur impulsartig aktiviert.

Die Steuerungsvorrichtung 26 kann weiters eine Sendeeinheit 27 umfassen, mit der eine Übermittlung von Zustandsdaten des Solarkollektors 1 an eine Benutzerschnittstelle oder einen Datenspeicher durchgeführt werden kann. So können beispielsweise die Pumpenlaufzeit, die Vorlauftemperatur, die Rücklauftemperatur, die geerntete thermische Energie usw. zur Information an den Benutzer übermittelt werden oder für spätere Auswertungen in einem Datenspeicher aufgezeichnet werden. Die Übermittlung an den Benutzer kann insbesondere über ein Drahtlosnetzwerk oder ein Mobilfunknetz erfolgen, wodurch ein Benutzer ohne sich im Nahbereich des Heizraums oder des Solarkollektors 1 aufhalten zu müssen, über den Betriebszustand des Solarkollektors 1 informiert werden kann.

Da die Temperatur des Wärmeträgerfluids 13 auch im Stagnationsfall durch die Abfuhr von überschüssiger Wärme über den Rückkühlkreislauf 16 auf relativ niedrigem Niveau, beispielsweise unter 95°C, insbesondere unter 85°C gehalten werden kann, ist es möglich, beim Solarkollektor 1 Teile desselben, wie beispielsweise das Kollektorgehäuse 2, den Absorber 3, den Rückkühlwärmetauscher 15, sowie Wärmeträgerleitungen überwiegend aus Polymermaterial auszubilden. Dadurch können bei einem mit einem Rückkühlwärmetauscher 15 ausgestatteten Solarkollektor 1 zusätzlich geringere Herstellkosten und/oder eine Gewichtsersparnis erzielt werden, ohne dass dadurch dessen Lebensdauer verkürzt wird.

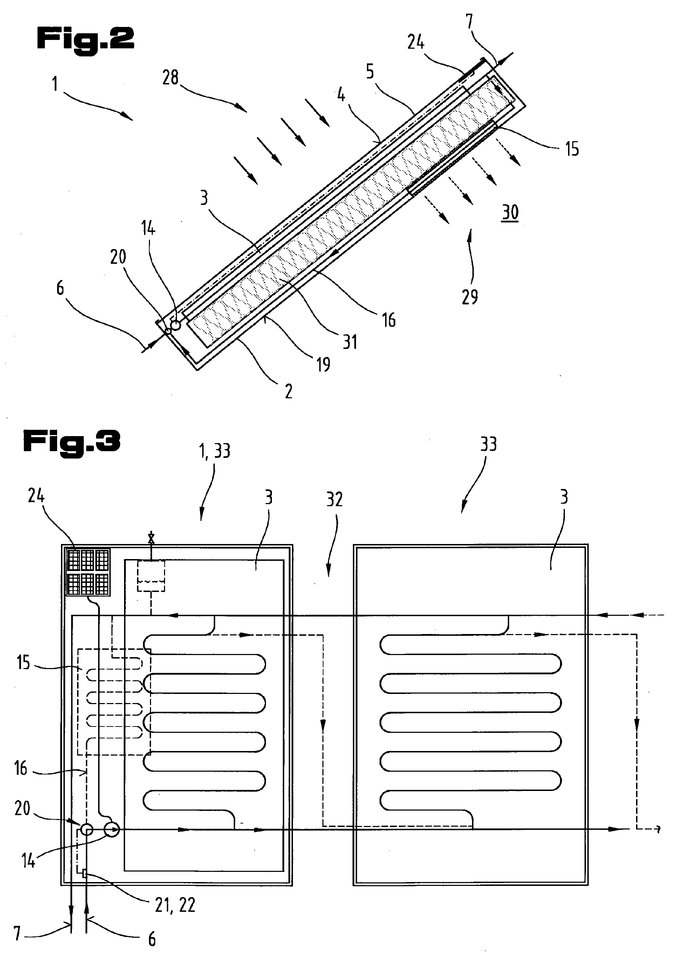

Fig. 2 zeigt einen Schnitt durch einen Solarkollektor 1 mit einer integrierten Pumpe 14 gemäß Linie II - II in Fig. 1 wie er anhand von Fig. 1 bereits beschrieben worden ist und sind dabei für gleiche oder gleichwirkende Bauteile dieselben Bezugszeichen eingetragen.

Fig. 2 zeigt eine Ausführungsform bei der die auf der Vorderseite 4 des Solarkollektors 1 einfallende Solarstrahlung 30 im Stagnationszustand von einem Rückkühlwärmetauscher 15 an der Rückseite 19 des Solarkollektors 1 als Abwärme 31 an die Außenumgebung 32 abgegeben wird. Der Solarkollektor 1 ist dabei in einer in mittleren Breitengraden üblichen schräg geneigten Einbaulage dargestellt und entspricht dies der üblichen Dachmontage oder aufgeständerten Montage.

Der Absorber 3 ist zur Verringerung von Abwärmeverlusten an der Vorderseite 4 des Solarkollektors 1 mit einer Abdeckscheibe 5 versehen und ist weiters zwischen Absorber 3 und Rückseite 19 des Solarkollektors 1 eine Wärmedämmung 33 angeordnet. Bei herkömmlichen Solarkollektoren ist diese gute Wärmedämmung des Absorbers 3 dafür verantwortlich, dass im Stagnationsfall sehr hohe Temperaturen auftreten, die die Bauteile des Solarkollektors 1 und das Wärmeträgerfluid 13 nachteilig beeinflussen können und ihre Lebensdauer wesentlich verkürzen können.

In Fig. 2 ist weiters der Rückkühlkreislauf 16 und die Strömungsrichtung des Wärmeträgerfluids 13 mit Pfeilspitzen gekennzeichnet.

Fig. 3 zeigt eine Solarkollektoranordnung 32, die zumindest zwei in Serienschaltung oder Parallelschaltung verbundene Solarkollektoren 33 umfasst, wobei zumindest ein Solarkollektor 33 als erfindungsgemäßer Solarkollektor 1 ausgebildet ist. Um Wiederholungen zu vermeiden bezüglich der Ausführung und Wirkungsweise des Solarkollektors 1 auf die Beschreibung zu den vorhergehenden Fig. 1 und 2 verwiesen.

In Fig. 3 ist der linke Solarkollektor 33 als erfindungsgemäßer Solarkollektor 1 ausgeführt, der zusätzlich zum Absorber 3 und zur Pumpe 14 einen optionalen Rückkühlwärmetauscher 15 umfasst. Die Umwälzung des Wärmeträgerfluids 13 durch die gesamte Solarkollektoranordnung 32 kann dabei durch die Pumpe 14 des erfindungsgemäßen Solarkollektors 1 bewerkstelligt werden, wodurch zusätzliche Pumpen oder eine Solarstation im Heizraum entfallen können. Die Pumpe 14 wird vorzugsweise wieder von einem Photovoltaikmodul 24 gespeist. Die Umschaltung zwischen Normalbetrieb und Rückkühlbetrieb erfolgt dabei mittels eines Ventils 20, das basierend auf der mit dem Temperatursensor 21 gemessenen Temperatur in der Rücklaufleitung 6 mittels eines Reglers 22 in Abhängigkeit von der gemessenen Temperatur verstellt wird.

An den erfindungsgemäßen Solarkollektor 1 schließt ein weiterer Solarkollektor 33 an, der im dargestellten Ausführungsbeispiel als herkömmlicher Solarkollektor ohne Pumpe 14, Rückkühlwärmetauscher 15 und Photovoltaikmodul 24 ausgebildet ist. Der weitere Solarkollektor 33 kann dabei wie in Volllinien dargestellt, parallel zum ersten Solarkollektor 1 angeschlossen sein oder alternativ auch wie in strichlierten Linien dargestellt, zum ersten Solarkollektor 1 in Serie angeschlossen sein. Bei beiden Anschlussvarianten erstreckt sich im Stagnationsfall der optionale Rückkühlkreislauf 16 auch auf den oder die weiteren Solarkollektoren 33, wodurch auch diese geringeren Temperaturbelastungen ausgesetzt sind. Die Wärmetauscherfläche des Rückkühlwärmetauschers 15 kann beim erfindungsgemäßen Solarkollektor 1 dabei auch größer ausgeführt sein, wodurch auch bei einer Solarkollektoranordnung 32 die eine größere Anzahl von Solarkollektoren 33 umfasst, lediglich ein erfindungsgemäßer Solarkollektor 1 erforderlich ist. Die vorteilhaften Effekte des erfindungsgemäßen Solarkollektors 1, wie die einfache Montage sowie die in den weiteren Ausführungsformen gegebene automatische selbstständige Temperaturbegrenzung im Stagnationsfall und die Überwachung des Wärmebedarfs durch Temperaturmessung in der Rücklaufleitung 6 wirken dabei auch auf die gesamte Solarkollektoranordnung 32.

Die Ausführungsbeispiele zeigen mögliche Ausführungsvarianten des Solarkollektors 1, wobei an dieser Stelle bemerkt sei, dass die Erfindung nicht auf die speziell dargestellten Ausführungsvarianten desselben eingeschränkt ist, sondern vielmehr auch diverse Kombinationen im Rahmen der Erfindung gemäß der beigefügten Ansprüche.

Der Ordnung halber sei abschließend darauf hingewiesen, dass zum besseren Verständnis des Aufbaus des Solarkollektors dieser bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2; 3 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Solarkollektor
- 2: Kollektorgehäuse
- 3: Absorber
- 4: Vorderseite
- 5: Abdeckscheibe

- 6: Rücklaufleitung
- 7: Vorlaufleitung
- 8: Absorberfläche
- 9: Absorberleitung
- 10: Ausgleichsgefäß

- 11: Einfüllstutzen
- 12: Sicherheitsventil
- 13: Wärmeträgerfluid
- 14: Pumpe
- 15: Rückkühlwärmetauscher

- 16: Rückkühlkreislauf
- 17: Leitungsverbindung
- 18: Leitungsverbindung
- 19: Rückseite
- 20: Ventil

- 21: Temperatursensor
- 22: Regler
- 23: Distanz
- 24: Photovoltaikmodul
- 25: Stromversorgungsleitung

- 26: Steuerungsvorrichtung
- 27: Sendeeinheit
- 28: Solarstrahlung
- 29: Abwärme
- 30: Außenumgebung

- 31: Wärmedämmung
- 32: Solarkollektoranordnung
- 33: Solarkollektor

## Patentansprüche

1. Solarkollektor (1) umfassend ein Kollektorgehäuse (2), einen darin angeordneten und von einem Wärmeträgerfluid (13) durchströmten Absorber (3) zur Aufnahme von Solarstrahlung (28), eine zum Absorber (3) führende Rücklaufleitung (6) und eine vom Absorber (3) abgehende Vorlaufleitung (7), und eine Pumpe (14) zur Umwälzung eines Wärmeträgerfluids (13) durch den Absorber (3) welche am oder zumindest teilweise innerhalb des Kollektorgehäuses (2) angeordnet ist, **dadurch gekennzeichnet, dass** ein mittels zumindest eines Ventils (20) mit der Rücklaufleitung (6) und der Vorlaufleitung (7) verbindbarer Rückkühlwärmetauscher (15) in einer Rückkühlstellung des Ventils (20) mit dem Absorber (3) einen Rückkühlkreislauf (16) bildet und mit der Außenumgebung (30) des Solarkollektors (1) in Verbindung steht, sowie das Wärmeträgerfluid (13) mittels der Pumpe (14) durch den Rückkühlkreislauf (16) umwälzbar ist..

2. Solarkollektor (1) nach Anspruch 1, **dadurch gekennzeichnet, dass** am oder im Solarkollektor (1) ein temperaturabhängiger Regler (22) zur Verstellung des Ventils (20) angeordnet ist.

3. Solarkollektor (1) nach einem der Ansprüche 1 oder 2, **dadurch gekennzeichnet, dass** die Pumpe (14) mit einem am Solarkollektor (1) angeordneten Photovoltaikmodul (24) zur Stromversorgung verbunden ist.

4. Solarkollektor (1) nach einem der Ansprüche 1 bis 3, **dadurch gekennzeichnet, dass** der Rückkühlwärmetauscher (15) an der Rückseite (19) des Solarkollektors (1) angeordnet ist.

5. Solarkollektor (1) nach einem der Ansprüche 1 bis 4, **dadurch gekennzeichnet, dass** der Rückkühlwärmetauscher (15) mittels einer Wärmedämmung (31) thermisch vom Absorber (3) getrennt ist.

6. Solarkollektor (1) nach einem der Ansprüche 1 bis 5, **dadurch gekennzeichnet, dass** der Rückkühlwärmetauscher (15) eine Wärmetauscherfläche aufweist, die zwischen 20 % und 95 % der Absorberfläche beträgt.

7. Solarkollektor (1) nach einem der Ansprüche 1 bis 5, **dadurch gekennzeichnet, dass** der Rückkühlwärmetauscher (15) eine Wärmetauscherfläche aufweist, die zumindest 100 % der Absorberfläche beträgt oder im Wesentlichen durch die gesamte Rückseite (19) des Solarkollektors (1) gebildet ist.

8. Solarkollektor (1) nach einem der Ansprüche 3 bis 7, **dadurch gekennzeichnet, dass** das Photovoltaikmodul (24) eine optisch aktive Fläche aufweist, die zwischen 2 % und 30 % der Absorberfläche beträgt.

9. Solarkollektor (1) nach einem der Ansprüche 3 bis 7, **dadurch gekennzeichnet, dass** an der Stromverbindungsleitung (25) zwischen Photovoltaikmodul (24) und Pumpe (14) eine Steuerungsvorrichtung (26), insbesondere eine Impulssteuerung umfasst.

10. Solarkollektor (1) nach Anspruch 9, **dadurch gekennzeichnet, dass** die Steuerungsvorrichtung (26) mit einer Sendeeinheit (27) zur, insbesondere drahtlosen Übermittlung von Zustandsdaten des Solarkollektors (1), insbesondere der Pumpenlaufzeit, der Vorlauftemperatur und der Rücklauftemperatur, an eine Benutzerschnittstelle oder einen Datenspeicher verbunden ist.

11. Solarkollektor (1) nach einem der Ansprüche 1 bis 10, **dadurch gekennzeichnet, dass** zumindest einer der Bauteile Vorlaufleitung (7), Rücklaufleitung (6), Absorber (3), Rückkühlwärmetauscher (15), Kollektorgehäuse (2), Wärmedämmung (31) überwiegend aus Polymermaterial gebildet ist.

12. Solarkollektor (1) nach einem der Ansprüche 2 bis 11, **dadurch gekennzeichnet, dass** der Regler (22) von einem an der Rücklaufleitung (6) angeordneten und vom Rückkühlkreislauf (16) distanzierten Temperatursensor (21) angesteuert wird.

13. Solarkollektor (1) nach einem der Ansprüche 1 bis 12, **dadurch gekennzeichnet, dass** die Pumpe (14) im Rückkühlkreis (16) im Zweig der Rücklaufleitung (6) angeordnet ist.

14. Solarkollektor (1) nach einem der Ansprüche 1 bis 13, **dadurch gekennzeichnet, dass** der Absorber (3) mit einem in Einbaulage des Solarkollektors (1) oberhalb des Absorbers (3) angeordneten und vorzugsweise innerhalb des Kollektorgehäuses (2) angeordneten Ausgleichsgefäß (10) verbunden ist.

15. Solarkollektor (1) nach einem der Ansprüche 1 bis 14, **dadurch gekennzeichnet, dass** der Absorber (3) an seinem in Einbaulage des Solarkollektors (1) höchsten Punkt, einen verschließbaren Einfüllstutzen (11) aufweist.

16. Solarkollektor (1) nach Anspruch 15, **dadurch gekennzeichnet, dass** der Einfüllstutzen (11) mit einem Sicherheitsventil (12) versehen ist.

17. Solarkollektoranordnung (32) umfassend zwei oder mehr in Serienschaltung oder Parallelschaltung verbundene Solarkollektoren (33), dadurch dass zumindest ein Solarkollektor (33) als Solarkollektor (1) nach einem oder mehreren der Ansprüche 1 bis 16 ausgebildet ist.

18. Verfahren zum Betreiben eines Solarkollektors (1) gemäß Anspruch 1 bei dem ein Wärmeträgerfluid (13) von einer Rücklaufleitung (6) durch einen in einem Kollektorgehäuse (2) angeordneten und der Solarstrahlung (28) zugewandten Absorber (3) zu einer Vorlaufleitung (7) geführt wird, wobei die Umwälzung des Wärmeträgerfluids (13) durch eine am oder zumindest teilweise innerhalb des Kollektorgehäuses (2) angeordnete Pumpe (14) erfolgt, **dadurch gekennzeichnet, dass** das Wärmeträgerfluid (13) bei Überschreiten einer Grenztemperatur in der Rücklaufleitung (6) ventilgesteuert nach dem Absorber (3) durch einen Rückkühlwärmetauscher (15) in einem Rückkühlkreislauf (16) geführt wird und die Pumpe (14) von einem am Solarkollektor (1) angeordneten Photovoltaikmodul (24) mit Strom versorgt wird..

## Claims

1. Solar collector (1) comprising a collector housing (2), an absorber (3) arranged therein and having a heating medium (13) flowing through it, to absorb solar radiation (28), a return line (6) leading to the absorber (3) and a flow line (7) leading away from the absorber (3) and a pump (14) arranged on or at least partially inside the collector housing (2) for circulating a heating medium fluid (13) through the absorber (3), **characterized in that** a heat exchanger (15) which can be connected to the return line (6) and to the flow line (7) by means of at least one valve (20) forms a recooling circuit (16) with the absorber (3) in a recooling position if the valve (20) and is connected to the external environment (30) of the solar collector (1), and the heating medium fluid (13) can be circulated through the recooling circuit (16) be means of the pump (14).

2. Solar collector (1) according to claim 1, **characterized in that** s temperature-dependent regulator (22) for adjusting the valve (20) is arranged in or on the solar collector (1).

3. Solar collector (1) according to one of claims 1 or 2, **characterized in that** the pump (14) is connected to a photovoltaic module (24) arranged on the solar collector (1) to supply the electricity.

4. Solar collector (1) according to one of claims 1 to 3, **characterized in that** the heat exchanger (15) is arranged in the rear side (19) of the solar collector (1).

5. Solar collector (1) according to one of claims 1 to 4, **characterized in that** the heat exchanger (15) is thermally separated from the absorber (3) by means of a thermal insulation (31).

6. Solar collector (1) according to one of claims 1 to 5, **characterized in that** the heat exchanger (15) has a heat exchanger surface which amounts to between 20% and 95% of the absorber area.

7. Solar collector (1) according to one of claims 1 to 5, **characterized in that** the heat exchanger (15) has a heat exchanger surface which amounts to at least 100% of the absorber surface or is essentially formed by the entire rear side (19) of the solar collector (1).

8. Solar collector (1) according to one of claims 3 to 7, **characterized in that** the photovoltaic module (24) has an optically active surface which amounts to between 2% and 30 % of the absorber area.

9. Solar collector (1) according to one of claims 3 to 7, **characterized in that** it comprises a control unit (26), in particular a pulse control unit on the power connection line (25) between the photovoltaic module (24) and the pump (14).

10. Solar collector (1) according to claim 9, **characterized in that** the control unit (26) is connected to a transmitter unit (27) for transmitting state data of the solar collector (1), in particular the pump running time, the flow temperature and the return temperature, to a user interface or a data memory in particular for wireless transmission.

11. Solar collector (1) according to one of claims 1 to 10, **characterized in that** at least one of the components including the flow line (7), the return line (6), absorber (3), heat exchanger (15), collector housing (2), thermal insulation (31) is formed primarily from polymer material.

12. Solar collector (1) according to one of claims 2 to 11, **characterized in that** the regulator (22) is controlled by a temperature sensor (21) arranged on the return line (6) and placed a distance away from the recooling circuit (16).

13. Solar collector (1) according to one of claims 1 to 12, **characterized in that** the pump (14) is arranged in the branch of the return line (6) in the recooling circuit (16).

14. Solar collector (1) according to one of claims 1 to 13, **characterized in that** the absorber (3) is connected to an equalizing vessel (10) arranged above the absorber (3) in the installed position of the solar collector (1) and preferably arranged within the collector housing (2).

15. Solar collector (1) according to one of claims 1 to 14, **characterized in that** the absorber (3) has a sealable filling connection (1) at its highest point in the installed position of the solar collector (1).

16. Solar collector (1) according to claim 15, **characterized in that** the filling connection (11) is provided with a safety valve (12).

17. Solar collector arrangement (32) comprising two or more solar collectors (33) connected in series connection or in parallel connection, **characterized in that** at least one solar collector (33) is designed as a solar collector (1) according to one or more of claims 1 to 17.

18. Method for operating a solar collector (1) according to claim 1 in which a heating medium fluid (13) is carried to a flow line (7) from a return line (6) through an absorber (3) arranged in a collector housing (2) and facing the solar radiation (28), and the heating medium fluid (13) is circulated by means of a pump (14) arranged on or at least partially inside the housing (2), **characterized in that** the heating medium fluid (13) is carried through a heat exchanger (15) in a return circuit (16) downstream from the absorber (3) in a valve-controlled process when a temperature limit is exceeded in the return line (6) and the pump (14) is supplied with electricity by a photovoltaic module (24) arranged on the solar collector (1).

## Revendications

1. Collecteur d'énergie solaire (1), comportant un carter (2), un absorbeur (3), qui est disposé dans celui-ci, est traversé par un fluide caloporteur (13) et est destiné à recevoir le rayonnement solaire (28), une conduite de retour (6) menant vers l'absorbeur (3), et une conduite d'alimentation (7) partant de l'absorbeur (3), et une pompe (14), qui permet de faire circuler un fluide caloporteur (13) à travers l'absorbeur (3) et qui est disposée sur ou du moins en partie à l'intérieur du carter (2) du collecteur, **caractérisé en ce qu'**un échangeur thermique de refroidissement (15), pouvant être relié à la conduite de retour (6) et à la conduite d'alimentation (7) au moyen d'au moins une vanne (20), forme avec l'absorbeur (3), dans une position de refroidissement de la vanne (20), un circuit de refroidissement (16) et communique avec l'environnement extérieur (30) du collecteur d'énergie solaire (1), et le fluide caloporteur (13) peut être mis en circulation à travers le circuit de refroidissement (16) au moyen de la pompe (14).

2. Collecteur d'énergie solaire (1) selon la revendication 1, **caractérisé en ce qu'**un dispositif de réglage (22), dépendant de la température et destiné à régler la vanne (20), est disposé sur ou à l'intérieur du collecteur d'énergie solaire (1).

3. Collecteur d'énergie solaire (1) selon la revendication 1 ou 2, **caractérisé en ce que** la pompe (14), en vue de l'alimentation en énergie électrique, est reliée à un module photovoltaïque (24) disposé sur le collecteur d'énergie solaire (1).

4. Collecteur d'énergie solaire (1) selon l'une quelconque des revendications 1 à 3, **caractérisé en ce que** l'échangeur thermique de refroidissement (15) est disposé sur la face arrière (19) du collecteur d'énergie solaire (1).

5. Collecteur d'énergie solaire (1) selon l'une quelconque des revendications 1 à 4, **caractérisé en ce que** l'échangeur thermique de refroidissement (15) est séparé thermiquement de l'absorbeur (3) au moyen d'une isolation thermique (31).

6. Collecteur d'énergie solaire (1) selon l'une quelconque des revendications 1 à 5, **caractérisé en ce que** l'échangeur thermique de refroidissement (15) comporte une surface d'échange thermique, qui représente entre 20 % et 95 % de la surface de l'absorbeur.

7. Collecteur d'énergie solaire (1) selon l'une quelconque des revendications 1 à 5, **caractérisé en ce que** l'échangeur thermique de refroidissement (15) comporte une surface d'échange thermique qui représente au moins 100 % de la surface de l'absorbeur ou est constituée sensiblement par la totalité de la face arrière (19) du collecteur d'énergie solaire (1).

8. Collecteur d'énergie solaire (1) selon l'une quelconque des revendications 3 à 7, **caractérisé en ce que** le module photovoltaïque (24) comporte une surface optiquement active qui représente entre 2 % et 30 % de la surface de l'absorbeur.

9. Collecteur d'énergie solaire (1) selon l'une quelconque des revendications 3 à 7, **caractérisé en ce qu'**un dispositif de commande (26), en particulier une commande à impulsions, est disposé sur la ligne électrique (25) entre le module photovoltaïque (24) et la pompe (14).

10. Collecteur d'énergie solaire (1) selon la revendication 9, **caractérisé en ce que** le dispositif de commande (26) muni d'une unité émettrice (27), permettant en particulier la transmission sans fil des données d'état du collecteur d'énergie solaire (1), en particulier la durée de fonctionnement de la pompe, la température d'alimentation et la température de retour, est relié à une interface utilisateur ou à une mémoire de données.

11. Collecteur d'énergie solaire (1) selon l'une quelconque des revendications 1 à 10, **caractérisé en ce qu'**au moins un des composants, à savoir la conduite d'alimentation (7), la conduite de retour (6), l'absorbeur (3), l'échangeur thermique de refroidissement (15), le carter (2) du collecteur, l'isolation thermique (31), est réalisé en majeure partie dans un matériau polymère.

12. Collecteur d'énergie solaire (1) selon l'une quelconque des revendications 2 à 11, **caractérisé en ce que** le dispositif de réglage (22) est commandé par un capteur de température (21) disposé sur la conduite de retour (6) et situé à distance du circuit de refroidissement (16).

13. Collecteur d'énergie solaire (1) selon l'une quelconque des revendications 1 à 12, **caractérisé en ce que** la pompe (14) est disposée dans le circuit de refroidissement (16) dans la branche de la conduite de retour (6).

14. Collecteur d'énergie solaire (1) selon l'une quelconque des revendications 1 à 13, **caractérisé en ce que** l'absorbeur (3) est relié à un réservoir de compensation (10), disposé au-dessus de l'absorbeur (3) dans la position montée du collecteur d'énergie solaire (1) et, de préférence, à l'intérieur du carter (2) du collecteur.

15. Collecteur d'énergie solaire (1) selon l'une quelconque des revendications 1 à 14, **caractérisé en ce que** l'absorbeur (3) comporte, au niveau de son point le plus haut dans la position montée du collecteur d'énergie solaire (1), une tubulure d'admission (11) apte à être fermée.

16. Collecteur d'énergie solaire (1) selon la revendication 15, **caractérisé en ce que** la tubulure d'admission (11) est munie d'une soupape de sûreté (12).

17. Ensemble de collecteurs d'énergie solaire (32), comportant deux de collecteurs d'énergie solaire (33) ou plus, montés en série ou montés en parallèle, **caractérisé en ce qu'**au moins un collecteur d'énergie solaire (33) est réalisé sous la forme d'un collecteur d'énergie solaire (1) selon une ou plusieurs des revendications 1 à 16.

18. Procédé permettant le fonctionnement d'un collecteur d'énergie solaire (1) selon la revendication 1, dans lequel un fluide caloporteur (13) est mené depuis une conduite de retour (6) vers une conduite d'alimentation (7) en passant par un absorbeur (3), disposé dans un carter (2) du collecteur et orienté vers le rayonnement solaire (28), le fluide caloporteur (13) étant mis en circulation par une pompe (14) disposée sur ou au moins en partie à l'intérieur du carter (2) du collecteur, **caractérisé en ce que** le fluide caloporteur (13), lorsque la température dans la conduite de retour (6) est supérieure à une température limite, est guidé par la commande de la vanne, en aval de l'absorbeur (3) à travers un échangeur thermique de refroidissement (15) vers un circuit de refroidissement (16) et la pompe (14) est alimentée en courant par un module photovoltaïque (24) disposé sur le collecteur d'énergie solaire (1).
